# EUROPÄISCHE PATENTSCHRIFT

(11) **EP 2 606 569 B1**
(45) Veröffentlichungstag und Bekanntmachung des Hinweises auf die Patenterteilung: **18.06.2014**
(21) Anmeldenummer: 11746474.3
(22) Anmeldetag: 11.08.2011
(51) Int. Cl.: H02N 2/10

(54) **PIEZOMOTOR**
PIEZO MOTOR
MOTEUR PIÉZOÉLECTRIQUE

(30) Priorität: 20.08.2010 DE 102010035045
(43) Veröffentlichungstag der Anmeldung: 26.06.2013
(73) Patentinhaber: ASPRE AG, 9050 Appenzell (CH)
(72) Erfinder: SACHER, Friedrich-Josef, 53842 Troisdorf (DE)
(74) Vertreter: Patentanwälte Freischem
(86) Internationale Anmeldenummer: PCT/EP2011/004013
(87) Internationale Veröffentlichungsnummer: WO 2012/022443

(56) Entgegenhaltungen:
- EP-A2- 1 746 668
- WO-A1-2007/068441
- DE-A1- 10 117 465

## Beschreibung

Die Erfindung bezieht sich auf einen Piezomotor mit einem Stator und einem Rotor und mindestens einen vom Stator gehaltenen und den Rotor antreibenden Treibfinger, der mit mindestens einem Piezoelement zusammenwirkt. Der Rotor kann um den Stator rotieren, der von einer Statorachse festgehalten wird. Dieser Rotor hat eine hohlzylindrische Ringfläche, auf die der Treibfinger einwirkt. Der Rotor kann aber auch neben dem Stator angeordnet sein und der vom Stator an einem Ende gehaltene Treibfinger wirkt auf eine zylindrische Ringfläche des Rotors ein.

Piezomotoren dieser Art sind bekannt aus den folgenden Schriften: DE 10 2006 004 194; EP 0 951 078; WO 01/41228; EP 1 192 704.

Bei diesen Piezomotoren werden mit Hilfe des reziproken Piezoeffekts elektrische Schwingungen in mechanische Schwingungen umgewandelt und diese mechanischen Schwingungen eines Treibfingers werden zum Antrieb eines Rotors genutzt. Wenn auch die Ausschläge des Treibfingers sehr klein sind, wird wegen der hohen Geschwindigkeit dieser Ausschläge eine ausreichend hohe Drehzahl des Rotors erreicht.

Bei den bekannten Piezomotoren wird der Treibfinger von einem Resonanzkörper gebildet, der von einem Schwingungsgenerator aus piezoelektrischem Material in Schwingung versetzt wird. Das schwingende Ende des Treibfingers wird von einer Federvorrichtung gegen eine Ringfläche eines Rotors gedrückt, wodurch ein Reibkontakt hergestellt wird.

Der Reibkontakt des Treibfingers mit dem Rotor hat den Nachteil, dass die schwingende Kontaktfläche des Treibfingers relativ schnell verschleißt und dass die in Antriebsrichtung verlaufende Komponente nicht voll genutzt wird. Ferner können nur sehr geringe Kräfte vom Treibfinger auf den Rotor übertragen werden.

Der Erfindung liegt die Aufgabe zu Grunde, einen Piezomotor zu schaffen, bei dem die Kraftübertragung des Treibfingers auf den Rotor verbessert ist.

Diese Aufgabe wird nach der Erfindung dadurch gelöst, dass der Treibfinger mit seinem freien Ende eine gegen eine Ringfläche des Rotors andrückbare Mitnehmerbacke bewegt, wobei das freie Ende des Treibfingers radial verschieblich zwischen zwei Anschlägen der Mitnehmerbacke gehalten ist und die Mitnehmerbacke während der Antriebsbewegung des Treibfingers von mindestens einem Piezoaktor im Rhythmus der Antriebsbewegung des Treibfingers gegen den Rotor andrückbar und zusammen mit dem Piezoaktor entsprechend der Größe des Ausschlages des Treibfingers in Antriebsrichtung und zurück um die Rotorachse schwenkbar ist.

Bei diesem Piezomotor werden die Schwingungen des Treibfingers von einer Mitnehmerbacke aufgenommen, die von einem weiteren Piezoaktor im Rhythmus der Schwingung des Treibfingers gegen eine hohlzylindrische oder zylindrische Ringfläche des Rotors gedrückt wird. Dadurch werden Schlupfverluste weitgehend vermieden und es können auch größere Kräfte vom Treibfinger über den Mitnehmer auf den Rotor übertragen werden.

Die Kontaktfläche der Mitnehmerbacke ist relativ groß und so beschaffen, dass eine gute Reibverbindung zwischen Rotor und Mitnehmerbacke zustande kommt.

Das freie Ende des Treibfingers ist derart zwischen den Anschlägen der Mitnehmerbacke gehalten, dass das freie Ende sich in Längsrichtung des Treibfingers und rechtwinklig dazu bewegen kann. Das freie Ende des Treibfingers kann dann nicht nur in Antriebsrichtung und zurück, sondern auch im Kreis oder in einem Oval schwingen.

Der Treibfinger kann als Biegepiezo ausgebildet sein, der mit seinem festsitzenden Ende unverdrehbar im Stator gehalten ist, der einseitig oder beidseitig mit Piezokristallen beschichtet und nach einer oder zwei Seiten verbiegbar ist und teilweise aus einem elastischen Material besteht, das als Rückstellfeder dient.

Der Treibfinger kann aber auch mit seinem festsitzendem Ende um die Rotorachse schwenkbar am Stator gehalten sein und von einem Stapelaktor und einer Rückstellfeder oder einem zweiten Stapelaktor in Schwingung gesetzt werden.

Auf den Rotor können zwei oder mehrere von Treibfingern bewegte Mitnehmerbacken einwirken, deren Antriebspiezos und Andrück-Piezoaktoren mit gleicher Frequenz und zumindest teilweise phasenversetzt auf den Rotor einwirken.

In der folgenden Beschreibung werden Ausführungsbeispiele der Erfindung unter Bezugnahme auf die Zeichnungen näher beschrieben. Die Zeichnungen zeigen in
- Fig. 1: eine Schnittansicht eines Piezomotors nach den Schnittlinien I-I in Fig. 2
- Fig. 2: eine Schnittansicht des Piezomotors gemäß Fig. 1 nach den Schnittlinien II-II in Fig. 1
- Fig. 3: eine perspektivische Schnittansicht einer weiteren Ausführungsform eines Piezomotors
- Fig. 4: eine Prinzipdarstellung
- Fig. 5: eine Explosionsdarstellung des Piezomotors nach Fig. 3
- Fig. 6: eine Draufsicht auf ein von einem Stapelpiezoaktor angetriebenen Treibfinger
- Fig. 7: eine Draufsicht auf eine Piezowölbescheibe mit Mitnehmerbacken, die von einem Treibfinger bewegt werden, der von beidseitig angeordneten Stapelpiezoaktoren angetrieben wird
- Fig. 8: eine Draufsicht entsprechend Fig. 7, bei der die Mitnehmerbacke und die Innenseite des Rotors mit Zahnungen versehen sind.
- Fig. 9: vergrößerter Ausschnitt aus Fig. 8.

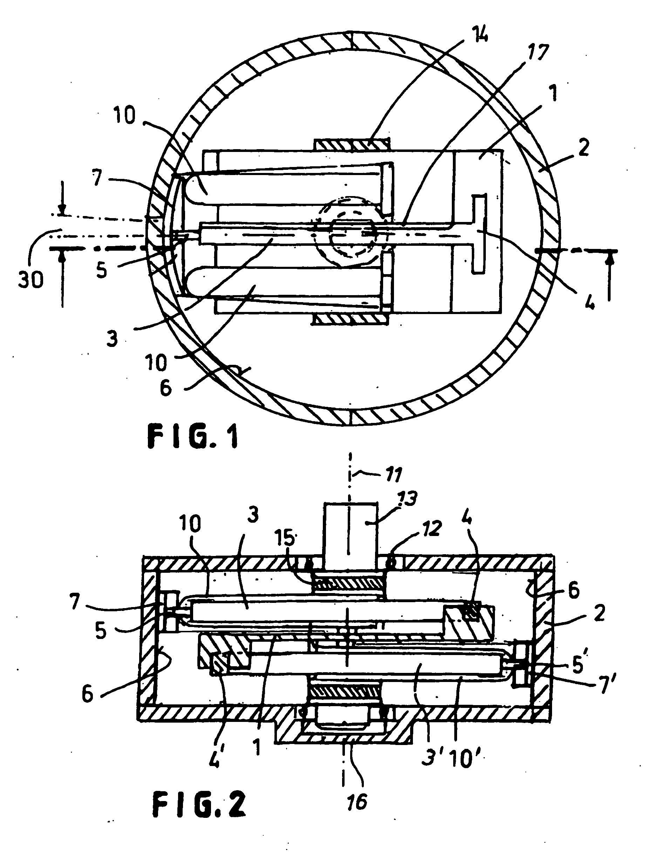

Der Piezomotor nach den Fig. 1 und 2 hat einen Stator 1 und einen um die Achse 11 drehbaren Rotor 2, der von einem Treibfinger 3 angetrieben wird. Der Treibfinger 3 hat ein vom Stator 1 gehaltenes festsitzendes Ende 4 und ein freies, bewegliches Ende 5. Der Treibfinger 3 wirkt mit mindestens einem Piezoelement 17 zusammen, welches das freie Ende 5 des Treibfingers 3 in eine Antriebsrichtung bewegt. Das freie Ende 5 des Treibfingers 3 ist radial verschieblich zwischen zwei Anschlägen 8 und 9 einer Mitnehmerbacke 7 gehalten, die während der Antriebsbewegung des Treibfingers 3 von mindestens einen Piezoaktor 10, der unter Spannung seine Länge ändert, gegen die Ringfläche 6 des Rotors 2 gedrückt wird. Der die Mitnehmerbacke 7 an den Rotor 2 andrückende Piezoaktor 10 kann beispielsweise ein Piezo-Stapelaktor sein.

Die mit dem Rotor 2 in Berührung kommende Fläche der Mitnehmerbacke 7 ist derart, dass bei Anlage eine gute Reibverbindung mit dem Rotor 2 zustande kommt. Weil die Mitnehmerbacke 7 während der Antriebsphase sich mit dem Rotor 2 um die Achse 11 verschwenkt, muss auch die Mitnehmerbacke 7 zusammen mit ihren Piezoaktor 10 um die Rotorachse 11 schwenkbar sein. Das antreibende Piezoelement 17 sowie der andrückende Piezoaktor 10 arbeiten mit gleicher Frequenz und im gleichen Rhythmus, so dass am Ende der Antriebsbewegung der Kontakt der Mitnehmerbacke 7 mit dem Rotor 2 aufgehoben und der Treibfinger 3 zusammen mit der Mitnehmerbacke 7 in die Ausgangsstellung zurückschnellt und ein neuer Antriebsschritt beginnen kann. Das Zurückschnellen des Treibfingers 3 kann aufgrund der Materialseigenschaft und Elastizität des Treibfingers 3 erfolgen oder aber auch durch einen weiteren in gleicher Frequenz aber phasenversetzt arbeitenden Piezoaktor. Das Abheben der Mitnehmerbacke 7 von der Ringfläche 6 kann mit Hilfe einer Rückstellfeder erfolgen.

Das freie Ende 5 des Treibfingers 3 kann auch nicht nur in Längsrichtung des Treibfingers 3, sondern auch rechtwinklig dazu und rechtwinklig zur Antriebsrichtung verschieblich zwischen den Anschlägen 8 und 9 der Mitnehmerbacke 7 gehalten sein, so dass das freie Ende 5 des Treibfingers 3 auch ovale Bewegungen ausführen kann.

Der Treibfinger 3 arbeitet in vorteilhafter Weise als Resonator, der von Piezokristallen zu Schwingungen in Eigenfrequenz erregt wird. Die Schwingungen können in Antriebsrichtung und zurück erfolgen oder aber auch entsprechend einer Ellipsenbahn oder Kreisbahn.

Die Piezokristalle 17 sind auf einer Seite des Treibfingers 3 angeordnet, sodass unter Spannung sich der Treibfinger zu dieser Seite hinbiegt und dabei die Mitnehmerbacke 7 mitnimmt. Weil am Ende dieser Bewegung die Mitnehmerbacke 7 ihren Kontakt mit der hohlzylindrischen Ringfläche 6 des Rotors 2 aufhebt, springt der Treibfinger 3 mit der Mitnehmerbacke 7 zurück in die Ausgangsstellung. Der Treibfinger 3 kann auch beidseitig mit Piezokristallen beschichtet sein, so dass der Rotor 2 sowohl im Uhrzeigersinn als auch gegen den Uhrzeigersinn drehen kann, sofern nur jeweils eine Seite des Treibfingers 3 unter Spannung versetzt wird und der Treibfinger 3 sich nach links oder rechts verbiegt.

Um einen größeren Gleichlauf des Rotors 2 und eine größere Leistung des Piezomotors zu erreichen, können zwei oder mehrere Treibfinger und mit diesen zusammenarbeitenden Mitnehmerbacken auf den Rotor 2 einwirken.

Wie Fig. 2 zeigt, sind zu beiden Seiten eines scheibenförmigen Stators 1 Treibfinger 3, 3' angeordnet, die mit Mitnehmerbacken 7 und 7' zusammenwirken. Die Treibfinger 3, 3' und die Mitnehmerbacken 7, 7' arbeiten mit gleicher Frequenz, jedoch um eine halbe Wellenlänge oder Phase versetzt. Bei drei Treibfingern mit Mitnehmerbacken sollte der Phasenversatz ein Drittel einer Phase und bei vier Treibfingern mit Mitnehmerbacken ein Viertel einer Wellenlänge oder Phase betragen.

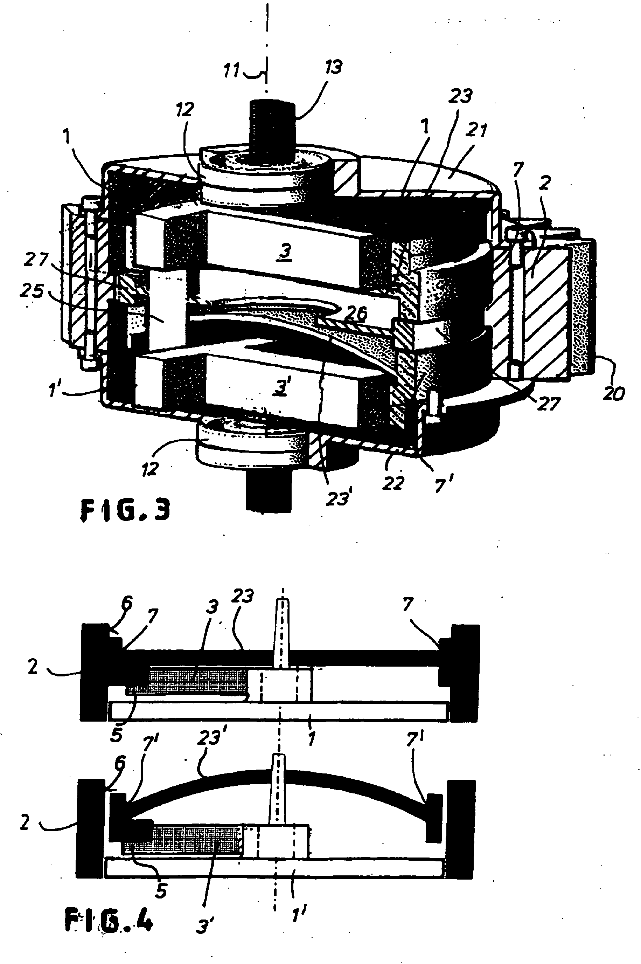

Bei der Ausführung eines Piezomotors nach den Fig. 3bis 5 ist die Arbeitsweise entsprechend dem Piezomotor nach Fig. 1 und 2. Die gleich wirkenden Teile sind mit den gleichen Bezugszeichen versehen. Der Rotor 2 umgibt den Stator 1 gehäuseartig und ist über zwei Gehäusedeckel 21, 22 und über Wälzlager 12 um eine feststehende Statorachse 13 drehbar gelagert. Der Stator 1 weist mindestens einen Treibfinger 3 auf, der mit mindestens einer Mitnehmerbacke 7 auf eine hohlzylindrische Ringfläche 6 des Rotors 2 einwirkt. Der Stator setzt sich zusammen aus einer oberen Statorscheibe 1, die mit der feststehenden Statorachse 13 fest verbunden ist und in der das festsitzende Ende 4 des Treibfingers 3 gehalten ist und einer unteren Statorscheibe 1', in der das festsitzende Ende 4' des Treibfinger 3' gehalten ist. Beide Statorscheiben 1, 1' sind über Bolzen 25 starr miteinander verbunden.

Bei dieser Ausführung werden die Mitnehmerbacken 7, 7' von je einer Piezo-Wölbescheibe 23, 23' gegen die Innenfläche 6 des Rotors 2 gedrückt, wenn die Treibfinger 3, 3' mit ihren freien Enden 5, 5' eine Bewegung in Antriebsrichtung machen. Die Piezo-Wölbescheiben 23, 23' haben an einer Seite eine Schicht aus Piezokristallen, die bewirken, dass sich unter Spannung die Scheiben wölben. Dabei verringert sich der Umfang der Scheiben 23, 23'. Sind die Scheiben 23, 23' spannungslos, dann sind sie eben und haben einen größeren Umfang, sodass die Mitnehmerbacken 7, 7' gegen den Rotor 2 gedrückt werden.

In Fig. 3 ist zwischen den oberen und unteren Mitnehmerbacken 7 und 7' eine feststehende Zwischenscheibe 26 angeordnet, die einen Gleitring 27 trägt, an den die Mitnehmerbacken 7 und 7' anliegen.

In der Prinzipdarstellung nach Fig. 4 arbeitet der Treibfinger 3 mit den Mitnehmerbacke 7 und der Treibfinger 3' mit den Mitnehmerbacke 7' zusammen. Die Piezo-Wölbescheiben 23, 23' sind starr und gegebenenfalls einstückig mit den zugehörigen Mitnehmerbacken 7, 7' verbunden. Die Piezo-Wölbescheibe 23 des oberen Treibfingers 3 ist ohne Spannung und liegt flach in einer Ebene, so dass die Mitnehmerbacken 7 von der PiezoWölbescheibe 23 gegen die Innenfläche 6 des Rotors 2 gedrückt werden. Gleichzeitig steht die Piezo-Wölbescheibe 23' des unteren Treibfingers 3' unter Spannung, wodurch sich diese Wölbescheibe 23' wölbt und sich ihr Umfang verkleinert und die Mitnehmerbacke 7' sich vom Rotor 2 löst.

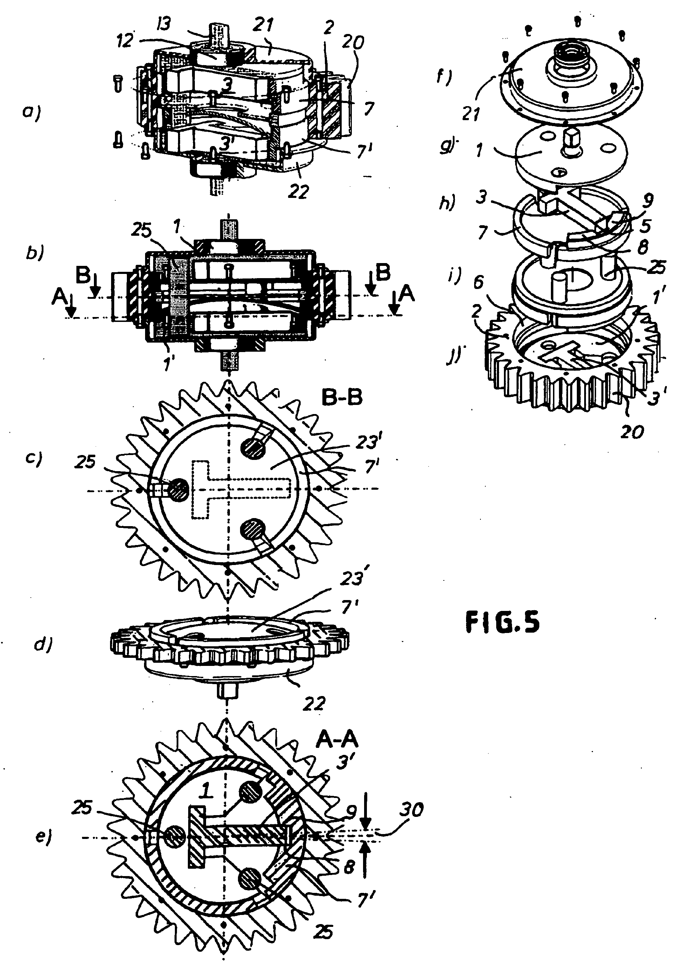

Die Fig. 5 mit den Einzelzeichnungen a), b), c), d), e), f), g), h), i) und j) zeigt in einer Gesamtübersicht Einzelteile des Piezomotors nach der Erfindung.

Die Fig. 5 a) ist eine Verkleinerung der Fig. 3.

Die Fig. 5 b) zeigt eine Schnittansicht des Piezomotors mit einem Schnitt parallel zur Rotorachse 11 und parallel zu den Treibfingern 3, 3'.

Die Fig. 5 c) zeigt eine Ansicht nach der Schnittlinie B-B in Fig. 5 b) auf die Piezo-Wölbescheibe 23 mit den Mitnehmerbacken 7 und den Verbindungsbolzen 25 des Stators 1.

Die Fig. 5 d) zeigt eine perspektivische Ansicht des Teiles nach Fig. 5 c).

Die Fig. 5 e) zeigt eine Ansicht nach der Schnittlinie A-A in Fig. 5 b) mit Draufsicht auf die untere Statorscheibe 1' den unteren Treibfinger 3' und die unteren Mitnehmerbacken 7' mit den Anschlägen 8, 9, zwischen denen das freie Ende 5 des Treibfingers 3' längsverschieblich gehalten ist.

Ferner ist die Größe eines Antriebsschnittes 30, der durch die Biegeverformung des Treibfingers 3' zustande kommt, angedeutet.

Die Fig. 5 f) zeigt perspektivisch den oberen Gehäusedeckel 21, der auf den Rotor 2 beziehungsweise auf das Zahnrad 20 aufschraubbar ist.

Die Fig. 5 g) zeigt perspektivisch die obere Statorscheibe 1 mit Statorachse 13.

Die Fig. 5 h) zeigt perspektivisch den oberen Treibfinger 3, der mit seinem freien Ende 5 zwischen den Anschlägen 8 und 9 der Mitnehmerbacke 7 gehalten ist.

Die Fig. 5 i) zeigt perspektivisch den Gleitring 27, die Stator-Verbindungsbolzen 25 und die unteren Mitnehmerbacken 7'.

Die Fig. 5 j) zeigt perspektivisch den Rotor 2 mit seiner hohlzylindrischen Fläche 6 und die untere Statorscheibe 1' mit dem unteren Treibfinger 3'.

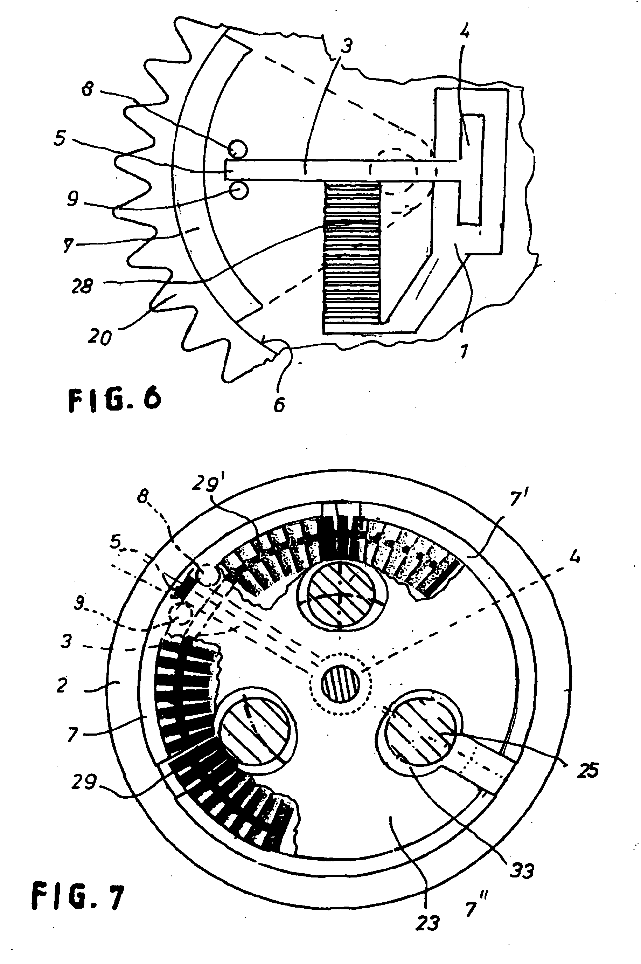

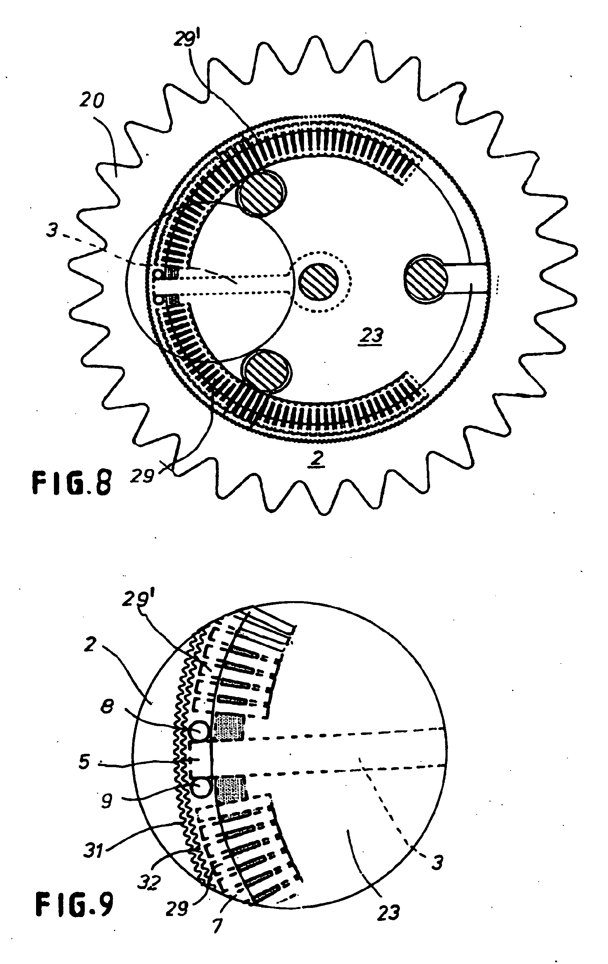

Die Fig. 6 zeigt, dass der Treibfinger 3 von einem Stapelpiezoaktor 28 - auch Stack-Piezoaktor genannt - angetrieben wird. Der Stapelpiezoaktor 28 kann an einer Seite des Treibfingers 3 oder auch an beiden Seiten des Treibfingers 3 angeordnet werden, um den Treibfinger 3 nach einer Seite zu biegen oder entweder nach einer Seite oder nach der anderen Seite zu biegen, sodass der Rotor 2 im Uhrzeigersinn oder im Gegenuhrzeigersinn angetrieben wird. Der Stapelpiezoaktor 28 kann in bekannter Weise gerade sein oder aber auch zur Vergrößerung der Zahl der Piezoaktorscheiben kreisbogenförmig gekrümmt, wie die Figuren 7 und 8 zeigen.

Die Fig. 7 zeigt eine Draufsicht auf drei Mitnehmerbacken 7, 7' und 7", die von einer einstückig damit verbundenen Piezo-Wölbescheibe 23 in Anlage an die hohlzylindrische Ringfläche des Rotors 2 gehalten wird. Unter Spannung wölbt sich die Piezo-Wölbescheibe 23, wodurch sich ihr Umfang verkleinert und die Mitnehmerbacke 7 sich von der hohlzylindrischen Fläche 6 des Rotors 2 abhebt.

Wie insbesondere die Figur 7 zeigt, sind in der Piezo-Wölbescheibe 23 Durchlassöffnungen 33 eingearbeitet für die Bolzen 25, welche die scheibenförmigen Teile des Stators 1 starr miteinander verbinden. Diese Durchlassöffnungen 33 sind so geformt, dass sich die Wölbescheibe 23 relativ zu den Bolzen 25 mindestens um die Größe eines Ausschlages 30 verschwenken lässt. Ferner sind diese Öffnungen 33 so geformt und angeordnet, dass die Wölbescheibe 23 in der gewölbten Stellung an diesen drei Bolzen anliegt und sich so zur Rotorachse 11 zentriert. Damit ist sichergestellt, dass sich die Mitnehmerbacken 7, 7' von der Ringfläche 6 des Rotors 2 abheben, wenn der Umfang der Wölbescheibe 23 kleiner wird.

In den Figuren 1 bis 5 ist der Treibfinger 3 mit seinem festsitzendem Ende 4 unverdrehbar im Stator 1 gehalten und durch Verbiegen des Treibfingers 3 erfolgt der Ausschlag 30. Die Rückstellung des Treibfingers erfolgt durch seine Elastizität.

In Figur 7 wird der Treibfinger 3 von einem Stapelaktor 29 in Antriebsrichtung und von einem zweiten Stapelaktor 29' in die Ausgangsstellung bewegt. In diesem Fall ist der Treibfinger 3 an seinem festsitzendem Ende 4 um die Rotorachse drehbar gelagert. Die Schwingungen des Treibfingers 3 werden von den Stapelaktoren 29, 29' erzeugt.

Wie die Figuren 8 und 9 zeigen, kann der Piezomotor nach der Erfindung auch als Mikro-Stellmotor arbeiten, wenn die Ringfläche 6 des Rotors 2 und die Mitnehmerbacke 7 Zahnungen 31 und 32 aufweisen, die beim Andrücken der Mitnehmerbacke 7 ineinander greifen. Die Teilung dieser Zahnung entspricht dabei einem Ausschlag 30 des Treibfingers 3.

Der Piezomotor nach der Erfindung ist dargestellt und beschrieben mit einem Rotor 2, der den Stator 1 umgibt. In kinematischer Umkehrung kann aber auch der Stator den Rotor umgeben oder neben einem Rotor angeordnet sein und der Treibfinger und die Mitnehmerbacken wirken auf einer zylindrischen Ringfläche des Rotors. Diese Ausführung eines Piezomotors ist nicht so kompakt wie der beschriebene und dargestellte Piezomotor und der konstruktive Aufwand ist größer.

### Bezugszeichenliste

- 1: Statorscheibe
- 2: Rotor
- 3: Treibfinger
- 4: festsitzendes Ende
- 5: freies Ende
- 6: Ringfläche des Rotors 2
- 7, 7': Mitnehmerbacke
- 8: Anschlag
- 9: Anschlag
- 10: andrückender Piezoaktor
- 11: Rotorachse
- 12: Lager, Wälzlager, Kugellager
- 13: Statorachse
- 14: umgreifende Statorwände
- 15: Brücke
- 16: Anschlussflansch
- 17: Piezo-Kristallschicht
- 18:
- 19:
- 20: Zahnrad
- 21: Gehäusedeckel
- 22: Gehäusedeckel
- 23: Piezo-Wölbescheibe
- 24: Teil der Mitnehmerbacke 7 mit den Anschlägen 8, 9
- 25: Verbindungsbolzen
- 26: Zwischenscheibe
- 27: Gleitring
- 28: Piezo-Stapelaktoren
- 29: Piezo-Stapelaktoren
- 30: Ausschlag des Treibfingers 3
- 31: Zahnung des Rotors
- 32: Zahnung der Mitnehmerbacke
- 33: Durchlassöffnungen

## Patentansprüche

1. Piezomotor mit einem Stator (1) und einem Rotor (2) und mindestens einem vom Stator (1) gehaltenen und den Rotor (2) antreibenden mit mindestens einem Piezoelement zusammenwirkenden Treibfinger (3), **dadurch gekennzeichnet, dass** der Treibfinger (3) mit seinem freien Ende (5) eine gegen eine Ringfläche (6) des Rotors (2) andrückbare Mitnehmerbacke (7) bewegt, wobei das freie Ende (5) des Treibfingers (3) radial verschieblich zwischen zwei Anschlägen (8, 9) der Mitnehmerbacke (7) gehalten ist und die Mitnehmerbacke (7) während der Antriebsbewegung des Treibfingers (3) von mindestens einem Piezoaktor (10) im Rhythmus der Antriebsbewegung des Treibfingers (3) gegen den Rotor (2) andrückbar und zusammen mit dem Piezoaktor (10) entsprechend der Größe eines Ausschlages (30) des Treibfingers (3) in Antriebsrichtung und zurück um die Rotorachse (11) schwenkbar ist.

2. Piezomotor nach Anspruch 1, **dadurch gekennzeichnet, dass** das freie Ende (5) des Treibfingers (3) auch rechtwinklig zur Antriebsrichtung verschieblich zwischen den Anschlägen (8, 9) der Mitnehmerbacke (7) gehalten ist.

3. Piezomotor nach Anspruch 1 oder 2, **dadurch gekennzeichnet, dass** der Treibfinger (3) mit seinem festsitzenden Ende (4) unverdrehbar im Stator (1) gehalten ist, nach mindestens einer Seite in Antriebsrichtung verbiegbar ist und aus einem elastischen Material besteht, das als Rückstellfeder dient.

4. Piezomotor nach einem der Ansprüche 1 bis 3, **dadurch gekennzeichnet, dass** der Treibfinger (3) einseitig oder beidseitig mit Piezokristallen beschichtet ist.

5. Piezomotor nach einem der Ansprüche 1 bis 4, **dadurch gekennzeichnet, dass** der Treibfinger (3) ein Resonator ist.

6. Piezomotor nach Anspruch 1 oder 2, **dadurch gekennzeichnet, dass** der Treibfinger (3) mit seinem festsitzenden Ende (4) um die Achse (11) des Rotors (2) verschwenkbar gelagert ist und von einem Piezo-Stapelaktor (28) in Antriebsrichtung antreibbar ist und von einer Rückstellfeder oder einem weiteren Piezo-Stapelaktor (29) in Ausgangsstellung rückstellbar ist.

7. Piezomotor nach einem der Ansprüche 1 bis 6, **dadurch gekennzeichnet, dass** die Mitnehmerbacke (7) mit mindestens einer weiteren Mitnehmerbacke (7) verbunden ist, die auf der gegenüberliegenden Seite der ersten Mitnehmerbacke (7) angeordnet ist und beide Mitnehmerbacken (7) von einem sich gegen beide Mitnehmerbacken (7) abstützenden und in seiner Länge sich ändernden Piezoaktor (10) gegen die Ringfläche (6) des Rotors (2) andrückbar sind.

8. Piezomotor nach einem der Ansprüche 1 bis 7, **dadurch gekennzeichnet, dass** mehr als zwei mit der ersten Mitnehmerbacke (7) verbundene Mitnehmerbacken (7', 7") vorgesehen sind, die von einer kreisrunden Piezo-Wölbescheibe (23) gegen die Ringfläche (6) des Rotors (2) andrückbar sind.

9. Piezomotor nach Anspruch 8, **dadurch gekennzeichnet, dass** die Piezo-Wölbescheibe (23) einstückig mit den Mitnehmerbacken (7, 7', 7") verbunden ist.

10. Piezomotor nach einem der Ansprüche 1 bis 9, **dadurch gekennzeichnet, dass** ein zweiter Treibfinger (3') mit gleicher Frequenz, jedoch um eine halbe Wellenlänge oder Phase versetzt auf den Rotor (2) einwirkt, wobei entsprechend Anspruch 1 auch der zweite Treibfinger (3') mit seinem freien Ende eine gegen den Rotor (2) andrückbare Mitnehmerbacke (7') bewegt, wobei das freie Ende (5') des Treibfingers (3') radial verschieblich zwischen zwei Anschlägen (8, 9') der Mitnehmerbacke (7') gehalten ist und die Mitnehmerbacke (7') während der Antriebsbewegung des Treibfingers (3') von mindestens einem Piezoaktor (10) im Rhythmus der Antriebsbewegung des Treibfingers (3') gegen den Rotor (2) andrückbar und zusammen mit dem Piezoaktor (10) um die Rotorachse (11) schwenkbar ist.

11. Piezomotor nach Anspruch 10, **dadurch gekennzeichnet, dass** der Stator (1) zwischen den beiden Treibfingern (3, 3') angeordnet und die Treibfinger (3, 3') mit ihren festsitzenden Enden (4) an beiden Seiten des Stators (1) gehalten sind.

12. Piezomotor nach einem der Ansprüche 1 bis 10, **dadurch gekennzeichnet, dass** drei oder n Treibfinger und drei oder n Mitnehmerbacken mit gleicher Frequenz, jedoch jeweils um eine 1/3 oder 1/n Wellenlänge oder Phase versetzt auf den Rotor einwirken.

13. Piezomotor nach einem der Ansprüche 1 bis 12, **dadurch gekennzeichnet, dass** die Mitnehmerbacke (7) eine Kontaktfläche aufweist, die sich über mindestens 1/8 der hohlzylindrischen Ringfläche (6) des Rotors (2) erstreckt und die bei Anlage in Reibkontakt kommt mit der Ringfläche (6).

14. Piezomotor nach einem der Ansprüche 1 bis 12, **dadurch gekennzeichnet, dass** die Mitnehmerbacke (7) eine Zahnung (32) aufweist, die bei Andrücken der Mitnehmerbacke (7) an den Rotor (2) in Eingriff kommt mit der Zahnung (31) des Rotors (2).

15. Piezomotor nach Anspruch 14, **dadurch gekennzeichnet, dass** die Teilung der Zahnung (31) des Rotors (2) und der Zahnung (32) der Mitnehmerbacke (7) der Größe des Ausschlages (30) des Treibfingers entspricht.

## Claims

1. Piezo motor having a stator (1) and a rotor (2) and at least one drive finger (3) which is held by the stator (1), drives the rotor (2) and interacts with at least one piezo element, **characterized in that** the drive finger (3) moves, with its free end (5), a driver jaw (7) which can be pressed against an annular face (6) of the rotor (2), wherein the free end (5) of the drive finger (3) is held in a radially displaceable fashion between two stops (8, 9) of the driver jaw (7), and during the drive movement of the drive finger (3) the driver jaw (7) can be pressed against the rotor (2) by at least one piezo actuator (10) in time with the drive movement of the drive finger (3), and can be pivoted in the drive direction and back about the rotor axis (11), together with the piezo actuator (10), in accordance with the magnitude of a deflection (30) of the drive finger (3).

2. Piezo motor according to claim 1, **characterized in that** the free end (5) of the drive finger (3) is displaceably held between the stops (8, 9) of the driver jaw (7), so as to be displaceable at a right angle to the drive direction.

3. Piezo motor according to claim 1 or 2, **characterized in that** the drive finger (3) is non-rotatably held with its fixed end (4) in the stator (1), can be bent toward at least one side in the drive direction and is composed of an elastic material which serves as a return spring.

4. Piezo motor according to one of claims 1 to 3, **characterized in that** the drive finger (3) is coated with piezo crystals on one side or on both sides.

5. Piezo motor according to one of claims 1 to 4, **characterized in that** the drive finger (3) is a resonator.

6. Piezo motor according to claim 1 or 2, **characterized in that** the drive finger (3) is mounted with its fixed end (4) so as to be pivotable about the axis (11) of the rotor (2), and can be driven in the drive direction by a piezo stack actuator (28), and can be returned into the home position by a return spring or a further piezo stack actuator (29).

7. Piezo motor according to one of claims 1 to 6, **characterized in that** the driver jaw (7) is connected to at least one further driver jaw (7) which is arranged on the opposite side of the first driver jaw (7), and the two driver jaws (7) can be pressed against the annular face (6) of the rotor (2) by a piezo actuator (10) which is supported against both driver jaws (7) and changes in length.

8. Piezo motor according to one of claims 1 to 7, **characterized in that** more than two driver jaws (7', 7") which are connected to the first driver jaw (7) and which can be pressed against the annular face (6) of the rotor (2) by a circular piezo curving disk (23) are provided.

9. Piezo motor according to claim 8, **characterized in that** the piezo curving disk (23) is connected in one piece to the driver jaws (7, 7', 7").

10. Piezo motor according to one of claims 1 to 9, **characterized in that** a second drive finger (3') acts on the rotor (2) with the same frequency but offset by half a wavelength or phase, wherein in a way corresponding to claim 1 the second drive finger (3') also moves, with its free end, a driver jaw (7') which can be pressed against the rotor (2), wherein the free end (5') of the drive finger (3') is held in a radially displaceable fashion between two stops (8, 9') of the driver jaw (7') and during the drive movement of the drive finger (3') the driver jaw (7') can be pressed against the rotor (2) by at least one piezo actuator (10) in time with the drive movement of the drive finger (3') and can be pivoted, together with the piezo actuator (10), about the rotor axis (11).

11. Piezo motor according to claim 10, **characterized in that** the stator (1) is arranged between the two drive fingers (3, 3'), and the drive fingers (3, 3') are held with their fixed ends (4) on both sides of the stator (1).

12. Piezo motor according to one of claims 1 to 10, **characterized in that** three or n drive fingers and three or n driver jaws act on the rotor with the same frequency but each offset by a 1/3 or 1/n wavelength or phase.

13. Piezo motor according to one of claims 1 to 12, **characterized in that** the driver jaw (7) has a contact face which extends over at least 1/8 of the hollow-cylindrical annular face (6) of the rotor (2) and, in the case of abutment, comes into frictional contact with the annular face (6).

14. Piezo motor according to one of claims 1 to 12, **characterized in that** the driver jaw (7) has a toothing (32) which comes into engagement with the toothing (31) of the rotor (2) when the driver jaw (7) presses against the rotor (2).

15. Piezo motor according to claim 14, **characterized in that** the pitch of the toothing (31) of the rotor (2) and of the toothing (32) of the driver jaw (7) corresponds to the magnitude of the deflection (30) of the drive finger.

## Revendications

1. Moteur piézoélectrique comprenant un stator (1) et un rotor (2), et au moins un doigt d'entraînement(3) coopérant avec un élément piézoélectrique qui est maintenu sur le stator (1) et qui entraîne le rotor (2), **caractérisé en ce que** le doigt d'entraînement(3) déplace, avec son extrémité libre (5), une mâchoire d'entraînement (7) pouvant être pressée contre une surface annulaire (6) du rotor (2), l'extrémité libre (5) du doigt d'entraînement (3) étant maintenue mobile longitudinalement entre deux butées (8, 9) de la mâchoire d'entraînement (7) et, pendant le mouvement d'entraînement du doigt d'entraînement (3), la mâchoire d'entraînement (7) pouvant être pressée contre le rotor (2) par au moins un actionneur piézoélectrique (10) au rythme du mouvement d'entraînement du doigt d'entraînement (3), et pouvant pivoter autour de l'axe de rotor (11) à l'aide de l'actionneur piézoélectrique (10) en fonction de l'amplitude (30) du doigt d'entraînement (3) dans le sens d'entraînement et en sens inverse.

2. Moteur piézoélectrique selon la revendication 1, **caractérisé en ce que** l'extrémité libre (5) du doigt d'entraînement (3) est maintenue de manière mobile, perpendiculairement à la direction d'entraînement, entre les butées (8, 9) de la mâchoire d'entraînement (7).

3. Moteur piézoélectrique selon la revendication 1 ou 2, **caractérisé en ce que** le doigt d'entraînement(3) est maintenu dans le stator (1) à l'aide de son extrémité fixe (4) d'une manière non rotative, peut être déformé vers au moins un côté dans la direction d'entraînement, et est réalisé en un matériau élastique, servant de ressort de rappel.

4. Moteur piézoélectrique selon l'une quelconque des revendications 1 à 3, **caractérisé en ce que** le doigt d'entraînement (3) est recouvert de cristaux piézoélectriques sur un côté ou sur deux côtés.

5. Moteur piézoélectrique selon l'une quelconque des revendications 1 à 4, **caractérisé en ce que** le doigt d'entraînement (3) est un résonateur.

6. Moteur piézoélectrique selon la revendication 1 ou 2, **caractérisé en ce que** le doigt d'entraînement(3), à l'aide de son extrémité fixe (4), est monté de manière pouvant pivoter autour de l'axe (11) du rotor (2), et est entraîné dans une direction d'entraînement par un actionneur à piézo-pile (28), et peut être rappelé dans la position de départ par un ressort de rappel ou un autre actionneur à piézo-pile (29).

7. Moteur piézoélectrique selon l'une quelconque des revendications 1 à 6, **caractérisé en ce que** la mâchoire d'entraînement (7) est reliée à au moins une autre mâchoire d'entraînement (7), qui est agencée sur le côté opposé de la première mâchoire d'entraînement (7), et les deux mâchoires d'entraînement (7) peuvent être pressées, par un actionneur piézoélectrique (10) supporté contre les deux mâchoire d'entraînement (7) et changeant sur la longueur, contre la surface annulaire (6) du rotor (2).

8. Moteur piézoélectrique selon l'une quelconque des revendications 1 à 7, **caractérisé en ce que** plus de deux mâchoires d'entraînement (7', 7") reliées à la première mâchoire d'entraînement (7) sont prévues, pouvant être pressées par un disque piézoélectrique bombé circulaire (23) contre la surface annulaire (6) du rotor (2).

9. Moteur piézoélectrique selon la revendication 8, **caractérisé en ce que** le disque piézoélectrique bombé circulaire (23) est relié en un seul bloc aux mâchoires d'entraînement (7, 7', 7").

10. Moteur piézoélectrique selon l'une quelconque des revendications 1 à 9, **caractérisé en ce qu'**un deuxième doigt d'entraînement(3') agit sur le rotor, ayant une fréquence identique, cependant modifiée d'une demie longueur d'onde ou phase, dans lequel, conformément à la revendication 1, le deuxième doigt d'entraînement (3') déplace, avec son extrémité libre (5'), une mâchoire d'entraînement (7') pouvant être pressée contre le rotor (2), l'extrémité libre (5') du doigt d'entraînement (3') étant maintenue mobile radialement entre deux butées (8', 9') de la mâchoire d'entraînement (7') et, pendant le mouvement d'entraînement du doigt d'entraînement (3'), la mâchoire d'entraînement (7) pouvant être pressée contre le rotor (2) par au moins un actionneur piézoélectrique (10) au rythme du mouvement d'entraînement du doigt d'entraînement (3'), et pouvant pivoter autour de l'axe de rotor (11) à l'aide de l'actionneur piézoélectrique (10)

11. Moteur piézoélectrique selon la revendication 10, **caractérisé en ce que** le stator (1) est agencé entre les deux doigts d'entraînement (3, 3'), et les doigts d'entraînement (3, 3') sont maintenus des deux côtés du stator (1) au moyens de leurs extrémités fixes (4)

12. Moteur piézoélectrique selon l'une quelconque des revendications 1 à 10, **caractérisé en ce que** trois ou n doigts d'entraînement et trois ou n mâchoires d'entraînement agissent sur le rotor, ayant une fréquence identique, cependant chacune modifiée de 1/3 ou 1/n de longueur d'onde ou de phase.

13. Moteur piézoélectrique selon l'une quelconque des revendications 1 à 12, **caractérisé en ce que** la mâchoire d'entraînement (7) présente une surface de contact, qui s'étend sur au moins 1/8 de la surface annulaire en forme de cylindre creux (6) du rotor (2), et qui vient en contact de frottement avec la surface annulaire (6) au moment de l'installation.

14. Moteur piézoélectrique selon l'une quelconque des revendications 1 à 12, **caractérisé en ce que** la mâchoire d'entraînement (7) présente une denture (32) qui, en pressant la mâchoire d'entraînement (7) sur le rotor (2), engrène avec la denture (31) du rotor (2).

15. Moteur piézoélectrique selon la revendication 14, **caractérisé en ce que** la séparation entre la denture (31) du rotor (2) et la denture (32) de la mâchoire d'entraînement (7) correspond à la grandeur de la déformation (30) du doigt d'entraînement.
